# EUROPEAN PATENT SPECIFICATION

(11) **EP 2 573 909 B1**
(45) Date of publication and mention of the grant of the patent: **30.03.2016**
(21) Application number: 10851737.6
(22) Date of filing: 18.05.2010
(51) Int. Cl.: H02K 5/10, B60L 3/00, H02K 5/20, H02K 9/19, B60W 10/10, B60W 10/196, H02K 9/24, B60L 11/00, B60L 11/12, B60L 11/14, B60L 11/18, B60L 15/00

(54) **VEHICLE CONTROL SYSTEM**
FAHRZEUGSTEUERUNGSSYSTEM
SYSTÈME DE GESTION D'UN VÉHICULE

(43) Date of publication of application: 27.03.2013
(73) Proprietor: TOYOTA JIDOSHA KABUSHIKI KAISHA, Toyota-shi, Aichi-ken, 471-8571 (JP)
(72) Inventor: TSUKASHIMA, Hiroyuki, Toyota-shi, Aichi 471-8571 (JP); KAMIJO, Hirotaka, Toyota-shi, Aichi 471-8571 (JP); SHIMANA, Tomoko, Toyota-shi, Aichi 471-8571 (JP); UMIGUCHI, Daisuke, Toyota-shi, Aichi 471-8571 (JP)
(74) Representative: TBK
(86) International application number: PCT/JP2010/058365
(87) International publication number: WO 2011/145173

(56) References cited:
- JP-A- 2006 220 165
- JP-A- 2006 220 165
- JP-A- 2006 296 133
- JP-A- 2009 106 024
- JP-A- 2010 104 191
- US-A- 4 864 974

## Description

### TECHNICAL FIELD

The present invention relates to a vehicle control system, and more particularly to a vehicle control system which performs control for a malfunction of a rotary electric machine.

### BACKGROUND ART

In vehicles in which a rotary electric machine is mounted, such as hybrid vehicles, a casing for the rotary electric machine contains a lubricating cooling fluid for lubrication and cooling. An oil known as automatic transmission fluid (ATF), a lubricating and operating oil used within an automatic transmission, is commonly used as such a lubricating cooling fluid.

For example, Japanese Patent Publication JP 2009-106024 A (Patent Document 1) describes a breather device which includes a case body which houses a motor generator and an intake valve provided in the case body, in which, when the pressure in the internal space fall below a predetermined pressure, the intake valve opens the space between the internal space and the external space and draws air into the internal space.

Further, Japanese Patent Publication JP 2008-228378 A (Patent Document 2) describes a motor insulation breakdown protective device in which, when an internal pressure of a motor room equals to or higher than a predetermined upper limit motor internal pressure, an electromagnetic valve is opened to discharge a portion of the internal gas within the motor room to the outside, and when the internal pressure of the motor room is lower than the predetermined upper limit motor internal pressure, the electromagnetic valve is closed. With this structure, the internal pressure of the motor room is adjusted to an appropriate internal pressure at which electric discharging is not caused.

Also, Japanese Patent Publication JP 10-174366 A (Patent Document 3) describes a cooler of a generator directly coupled to a crank shaft, which is configured such that a pipe connecting an on-vehicle pump and a pump load is branched where an electromagnetic valve is provided, so that air can be supplied to the generator side. While a vehicle is running, the generator is cooled by running wind. When the vehicle is stopped, air is supplied from the on-vehicle pump, which is in a state where there is no need to supply air to the pump load, to the generator for cooling.

### PATENT LITERATURE

Patent Document 1: JP 2009-106024 A
Patent Document 2: JP 2008-228378 A
Patent Document 3: JP 10-174366 A

### SUMMARY OF THE INVENTION

### TECHNICAL PROBLEMS

As described above, the casing for the rotary electric machine contains automatic transmission fluid (ATF). Here, if a malfunction occurs in the rotary electric machine due to some reasons and circulation of the ATF for cooling is disrupted to the extend that a coil end immersed in the ATF overheats, there may arise a possibility in which the ATF is heated to the point where it vaporizes and generates white smoke.

For example, if single phase of a three-phase inverter circuit which drives the rotary electric machine causes a short-circuit fault, and the vehicle experiencing the power outage is towed by any towing means, if, following a breakdown, the vehicle is towed in such a manner that the driving wheels are in contact with the road surface, the rotary electric machine will be rotated by the rotation of the driving wheels, and an electric current will therefore flow in the coil as a result of a counterelectromotive force generated by the magnets in the rotary electric machine. At this point, if, while the electric current flows in the inverter circuit, single phase of the inverter circuit is in a state of short-circuit fault, an electric current which is substantially twice that of the electric current flowing in other coils will flow in the coil experiencing the short-circuit fault phase. When an excessive, greater than normal electric current flows in one specific coil in this manner, it is possible for the rotary electric machine and the coil end to overheat and the magnet to be demagnetized, leading to a possibility of damage of the rotary electric machine itself. This may also cause overheating of the ATF, and there may arise situations in which white smoke is generated as described above.

If white smoke is emitted, the user may misconstrue that a fire the vehicle is on fire, even during a towing operation. In order to suppress overheating of the coil end of the rotary electric machine during the towing operation as described above, an increase in the size of the rotary electric machine or an increase in the thickness of the coil winding, or provision of a fuse or a breaking circuit which prohibits flow of the electric current, may be considered. However, these measures would increase cost or the loading capacity of the vehicle.

Further, given the present situation in which the use of hybrid vehicles or the like is spreading over wide areas over the world, it is not possible to predict where malfunctions or the like of the rotary electric machine will occur. Also, there are some circumstances in which the actual towing operation cannot be carried out as may be instructed by the predetermined operation manual, that is, situations in which the driving wheels cannot be prevented in contact with the road surface.

Further, while sealing of the interior of the rotary electric machine may be considered as a means to prevent white smoke from leaking to the outside even when the ATF is overheated, such complete sealing of the interior of the rotary electric machine is disadvantageous because it is desirable to allow the internal pressure in the rotary electric machine to correspond to the external pressure of the outside environment during the traveling of the vehicle in order to obtain an appropriate internal pressure of the rotary electric machine at which no electric discharging occurs, as described in Patent Document 2.

As described above, with conventional technologies, when a malfunction is caused in the rotary electric machine and the coil end overheats, it is difficult to prevent emission of white smoke generated by overheating of a lubricating cooling fluid contained in the interior of the rotary electric machine out of the rotary electric machine.

Furthermore, document JP 2010 104191 A discloses a bearing device, wherein, for pressure release of a space partitioned by a bearing labyrinth, a labyrinth breather or an electromagnetic valve is provided. When a smoke elimination fan operates normally, the electromagnetic valve is closed and bearing oil is kept at a negative pressure by means of the smoke elimination fan, so as to prevent leakage of the bearing oil from a bearing section. When the bearing oil has a negative pressure defect due to e.g. a failure of the smoke elimination fan, the electromagnetic valve is automatically opened to prevent leakage of the bering oil from the bearing section to the inside of an apparatus.

Still further, document US 4 864 974 A discloses a cooling apparatus for electrical accessories or a car, which comprises a cooling liquid conduit, at least one sensor for detecting the temperature of the cooling liquid, and at least one valve provided in the cooling liquid conduit, wherein opening and closing operations are controlled on the basis of an output from the sensor.

The present invention advantageously provides a vehicle control system which can suppress the emission of white smoke generated by overheating of a lubricating cooling fluid contained in the interior of the rotary electric machine out of the rotary electric machine, in a situation in which a malfunction is caused in the rotary electric machine and the coil end can be overheated.

### SOLUTION TO PROBLEMS

The above object is achieved by a vehicle control system according to claim 1. Further features and advantageous modifications are shown in the dependent claims.

In accordance with one aspect of the invention, there is provided a vehicle control system including a rotary electric machine which is mounted in a vehicle and contains a lubricating cooling fluid therein; a breather which is provided on a casing for the rotary electric machine, the breather preventing leakage of the lubricating cooling fluid and allowing gas communication with the outside; an on-off valve which is provided in a connection portion connecting the casing for the rotary electric machine with the breather, the on-off valve normally being in an open state. The vehicle control system further comprises a valve-closing unit which places the on-off valve into a closed state mechanically or based on an electrical signal satisfying a predetermined condition associated with generation of white smoke due to overheating of the lubricating cooling fluid, for suppressing emission of the generated white smoke.

Further, it is preferable that, in the vehicle control system, the valve-closing unit is a unit which, when a single phase short circuit fault occurs in an inverter circuit which drives the rotary electric machine, outputs, in response to a predetermined condition that a fault signal is output by means of an automatic diagnosis function, a valve-closing signal for closing an electrical on-off valve in synchronization with the fault signal.

Moreover, it is preferable that, in the vehicle control system, the on-off valve is an electrical on-off valve which operates electrically, and the valve-closing unit is a unit which, in response to a predetermined condition that a READY signal which enables the vehicle to run is turned off, outputs a valve-closing signal for closing the electrical on-off valve in synchronization with the turning off of the READY signal.

Also, it is preferable that, in the vehicle control system, the on-off valve is an electrical on-off valve which operates electrically, and the valve-closing unit is a unit which outputs a valve-closing signal for closing the electrical on-off valve in synchronization with a neutral signal which is output when an ignition switch is turned on a neutral state is set using a shift state setting mechanism, when the vehicle is towed by a towing unit.

Further, it may be preferable that, in the vehicle control system, the on-off valve is a mechanical on-off valve which operates mechanically, and the vehicle control system includes an operation cable having near end connected to an opening and closing unit for the on-off valve, the operation cable setting the on-off valve in a closed direction when far end thereof is mechanically moved, and an operation cable connection mechanism which is provided in a shift state setting mechanism of the vehicle, the operation cable connection mechanism moving far end of the operation cable when a neutral state is set by the shift state setting mechanism.

In addition, it may be preferable that, in the vehicle control system, the on-off valve is a mechanical on-off valve which operates mechanically, and the vehicle control system includes an operation cable having near end connected to an opening and closing unit for the on-off valve, the operation cable setting the on-off valve into a closed direction when far end thereof is mechanically moved, and an operation cable connection mechanism which is provided in an engage portion for towing that is used when towing the vehicle by another towing unit, the operation cable connection mechanism moving far end of the operation cable by a pulling force that is exerted on the engage portion for towing.

### ADVANTAGEOUS EFFECTS OF INVENTION

A vehicle control system with a structure as above includes an on-off valve which is normally in an open state and which is provided in a connection portion connecting a casing for a rotary electric machine with a breather, and this on-off valve is placed into a closed state under a predetermined condition that causes a lubricating cooling fluid to be overheated. With this structure, it is possible to suppress emission of white smoke generated by overheating of the lubricating cooling fluid to the outside.

Further, the vehicle control system may output a valve-closing signal for closing an electrical on-off valve in synchronization with the fault signal when it is determined, based on a predetermined condition that a fault signal is output by means of an automatic diagnosis function, that a single phase short circuit fault has occurred in an inverter circuit which drives the rotary electric machine. With this structure, when a situation in which the coil end is overheating due to the single phase short circuit fault of an inverter circuit can occur, it is possible to suppress emission of white smoke generated by overheating of the lubricating cooling fluid to the outside.

Also, in the vehicle control system, when the on-off valve is an electrical on-off valve which operates electrically, the electrical on-off valve may be closed in synchronization with the turning off of a READY signal based on a predetermined condition that the READY signal which enables the vehicle to run is turned off. By employing such control of the electric signal, it is possible to easily suppress emission of white smoke generated by overheating of the lubricating cooling fluid to the outside.

In addition, in the vehicle control system, when the on-off valve is an electrical on-off valve which operates electrically, the electrical on-off valve is closed in synchronization with a neutral signal which is output by turning an ignition switch on and setting a neutral state by a shift state setting mechanism, when the vehicle is towed by a towing unit such as another vehicle. As the steering wheel of the vehicle becomes inoperable if the ignition switch is turned off, the common practice is to turn the ignition switch on and shift the transmission to a neutral state when towing a fault vehicle. Because, in a vehicle which is equipped with an electric shift lever, a neutral signal is output at this time, and the on-off valve is closed by means of this neutral signal, it is possible to suppress emission of white smoke generated by overheating of the lubricating cooling fluid when the vehicle is being towed.

Moreover, in the vehicle control system, when the on-off valve is a mechanical on-off valve which operates mechanically, an operation cable having near end connected to an opening and closing unit for the on-off valve, which sets the on-off valve in a closed direction when far end thereof is mechanically moved, may be used; when the neutral state is set by a shift state setting mechanism, far end of the operation cable is moved. Because the steering wheel of the vehicle becomes inoperable if the ignition switch is turned off, a common practice is to turn the ignition switch on and shift the transmission to a neutral state when towing a fault vehicle. Because, in a vehicle which is equipped with a mechanical shift lever, the operation cable is moved by using this operation of the shift lever to thereby close the on-off valve, it is possible to suppress emission of white smoke generated by overheating of the lubricating cooling fluid at the time of towing. Such suppression of emission of white smoke generated by overheating of the lubricating cooling fluid to the outside is possible by means of a simple mechanical mechanism and without using an electrical signal.

Additionally, in the vehicle control system, when the on-off valve is a mechanical on-off valve which operates mechanically, an operation cable having near end connected to an opening and closing unit for the on-off valve, which sets the on-off valve in a closed direction when far end thereof is mechanically moved, may be used, and far end of the operation cable may be moved by using a pulling force which is exerted on an engage portion for towing which is used when towing the vehicle by another towing unit. With this structure, it is possible to suppress emission of white smoke generated by overheating of the lubricating cooling fluid to the outside by means of a simple mechanical mechanism without using an electrical signal.

### BRIEF DESCRIPTION OF THE DRAWINGS

These and other advantages of the invention will be explained in the description below, in connection with the accompanying drawings, in which:
FIG. 1 is a view for explaining a situation in which a fault vehicle is to be towed according to an embodiment of the present invention;
FIG. 2 is a view for explaining a state in which excessive electric current flows in a coil of a specific phase when short-circuit fault is caused in single phase of an inverter circuit connected with a rotary electric machine;
FIG. 3 is a view illustrating a comparison of electric current flowing in a coil of each phase;
FIG. 4 is a time chart illustrating a change of a state of various signals when a malfunction is caused in the rotary electric machine according to the embodiment of the present invention;
FIG. 5 is a view for explaining a structure of a vehicle control system according to the embodiment of the present invention;
FIG. 6 is a view for explaining a state in which an on-off valve is closed when a malfunction occurs in the rotary electric machine in the structure illustrated in FIG. 5;
FIG. 7 is a view for explaining another structure of a vehicle control system according to the embodiment of the present invention; and
FIG. 8 is a view for explaining a state in which an on-off valve is closed when a malfunction occurs in the rotary electric machine in the structure illustrated in FIG. 7.

### BEST MODE FOR CARRYING OUT THE INVENTION

Preferred embodiments of the present invention will be described with reference to the drawings. While in the following examples a hybrid vehicle will be described as an example of vehicle to be controlled by a vehicle control system, any vehicles in which a rotary electric machine is mounted can be a subject of control, and an electric vehicle in which a fuel cell is mounted, for example, can be controlled. Further, although in the following examples a single rotary electric machine will be described, a plurality of rotary electric machines can be mounted in a vehicle. Also, although in the following examples a four-wheel drive hybrid vehicle will be described in order to explain rotation of the driving wheels in contact with a road surface, other vehicles can also be used.

While in the following examples, a power source system including, as primary constitutional components, a power storage device, a voltage converter, and an inverter circuit, will be described, a power source system can include other components. For example, a system main relay, a low-voltage inverter circuit, a low-voltage power storage device, or the like, may be included.

The values for temperature, voltage, or the like noted in the following examples are described for illustrative purpose only, and can therefore be changed as appropriate in accordance with the specifications of the power source system or other criteria.

In the following description, corresponding similar components are assigned the same reference numerals which are used in all the drawings, and the description of these components is only provided once. Reference numerals will be re-used as necessary.

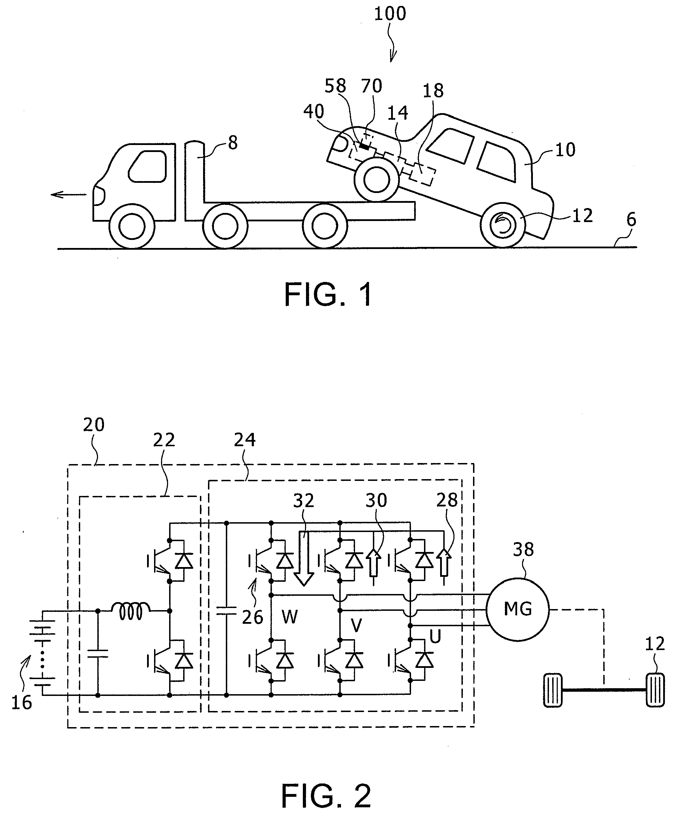

FIG. 1 illustrates a situation in which a vehicle 10 to which a vehicle control system 100 is to be applied experiences a malfunction and is to be towed by a rescue vehicle 8. Here, because the vehicle 10 with failure, which in this example is a four-wheel drive hybrid vehicle, is too large to be placed on a loading platform of the rescue vehicle 8, the vehicle 10 is towed with the front wheels placed and fixed on the loading platform and the rear wheels, which are driving wheels, in contact with a road surface 6. Accordingly, with the traveling of the rescue vehicle 8, the rear wheels of the vehicle 10 serving as driving wheels are rotated as illustrated. It should be noted that, in the case of vehicles other than four-wheel drive vehicles, the driving wheels can be similarly in contact with the road surface 6 depending on the towing situation. FIG. 1 illustrates one example in which the driving wheels are in contact with the road surface 6 at the time of towing.

The vehicle 10 includes, as driving sources, an engine, which is not shown, and a rotary electric machine. FIG. 1 illustrates a rotary electric machine unit 40 including a rotary electric machine, a power control unit (PCU) 14 connected to the rotary electric machine, and a controller 18. The rotary electric machine unit 40 includes a casing which houses the rotary electric machine and a lubricating cooling fluid, and a breather 70 provided on the casing via an on-off valve 58. The breather 70 prevents leakage of the lubricating cooling fluid and is normally in a gas communication state with the atmosphere, with the on-off valve 58 being in an open state.

The controller 18 has a function for controlling an operation of the vehicle 10 as a whole. In particular, the controller 18 has a function for suppressing emission of white smoke generated by overheating of the lubricating cooling fluid even when the coil end of the rotary electric machine is overheated. Specifically, the controller 18 includes a valve-closing processing unit which provides a valve-closing signal to the on-off valve 58. The controller 18 can be formed by a computer which is suitable for mounting on a vehicle, and the above functions can be implemented by executing software.

Here, before explaining the content of the vehicle control system 100, problems arising under the towing situation as illustrated in FIG. 1 will be described, assuming that the malfunction of the vehicle 10 that has caused the towing situation of FIG. 1 is a single phase short circuit of the inverter circuit which drives the rotary electric machine.

FIG. 2 illustrates a relationship among the rotary electric machine 38, the driving wheels 12 of the vehicle 10, and a power source system for driving the rotary electric machine 38. The power source system is formed by including a power storage device 16, a voltage converter 22, and an inverter circuit 24. The voltage converter 22 and the inverter circuit 24 can be collectively referred to as an inverter unit 20, which is a primary constitutional component of the PCU 14 of FIG. 1.

The rotary electric machine 38 is a motor generator (M/G) which is mounted on a vehicle, and is a three-phase synchronous rotary electric machine which functions as a motor when electric power is supplied thereto and functions as a power generator during braking.

The power storage device 16 which is a constitutional component of the power source system is a chargeable/dischargeable high voltage secondary battery. As the power storage device 16, a lithium ion battery pack or a nickel metal hydrogen battery pack having a terminal voltage of about 200V, or a capacitor, or the like can be used. A battery pack is formed of a combination of several batteries, referred to as "unit cells" or "battery cells", having a terminal voltage of 1V to several volts.

The inverter unit 20 is a circuit having a function for converting direct current electric power of the power storage device 16 which is a high-voltage direct current power source into a three-phase drive signal suitable for actuation of the rotary electric machine 38 which is to be three-phase driven. The inverter unit 20 is formed by including the voltage converter 22 and the inverter circuit 24, as described above.

The voltage converter 22 is a circuit having a voltage conversion function, which is disposed between the power storage device 16 and the inverter circuit 24. As illustrated in FIG. 2, the voltage converter 22 can be formed by including reactors, switching elements, and the like. The voltage converter 22 includes, as the voltage conversion function, a boosting function for boosting the voltage on the power storage device 16 side by using the energy accumulating operation of the reactor and supplying the voltage to the inverter circuit 24 side, and a step-down function for decreasing the electric power from the inverter circuit 24 side and supplying the power, as charging electric power, to the power storage device 16 side. Here, the voltage converter 22 includes a smoothing capacitor which suppresses the variation of the voltage and electric current.

The inverter circuit 24, which is connected to the rotary electric machine 38, is formed by including a plurality of switching elements, reverse-connection diodes, or the like, and has a function for performing electric power conversion between three-phase electric power and direct current electric power. More specifically, when the rotary electric machine 38 functions as a power generator, the inverter circuit 24 has an ac-dc conversion function for converting the three-phase regeneration electric power from the rotary electric machine 38 into direct current electric power and supplying the direct current electric power as a charging electric current to the power storage device 16 side. When the rotary electric machine 38 functions as an electric motor, the inverter circuit 24 has a dc-ac function for converting the direct current electric power from the power storage device side 16 into the three-phase driving electric power and supplying the three-phase driving electric power to the rotary electric machine 38. Here, the inverter circuit 24 includes a smoothing capacitor for suppressing variations of the voltage and the electric current.

The inverter circuit 24, having a function for performing conversion between the direct current electric power and the three-phase electric power as described above, corresponds to an U-phase, a V-phase, and a W-phase, which are three phases of the three-phase synchronous type rotary electric machine 38 and has three arms called an U-phase arm, a V-phase arm, and a W-phase arm. Here, the arm refers to a circuit element including two switching elements which are connected in series and diodes connected in parallel with the respective two switching elements in reverse connection. Here, the arm of each phase is connected to one end of the coil of each phase in the rotary electric machine 38. In the rotary electric machine 38, the other end of each-phase coil is mutually connected at a neutral point so that so-called Y connection is achieved. Accordingly, in consideration of the sign + or - in the current flowing direction, a sum of the quantity of the electric current flowing in coil in each phase or the arm in each phase is zero.

A single phase short circuit fault of the inverter circuit 24 refers to a fault in which a short circuit occurs in one of the three arms, while the two remaining arms operate normally. FIG. 2 illustrates a state in which the U-phase arm and the V-phase arm operate normally and the W-phase arm short-circuits. Here, because the sum of the quantity of the electric current flowing in each-phase arm is zero as described above, in the example illustrated in FIG. 2, an electric current 32, having a quantity which is equal to a sum of the quantities of the electric current 28 flowing in the U-phase arm and the electric current 30 flowing in the V-phase arm and having a flowing direction which is opposite to the flowing directions of the electric current 28 and the electric current 30, is considered to flow in the W-phase arm.

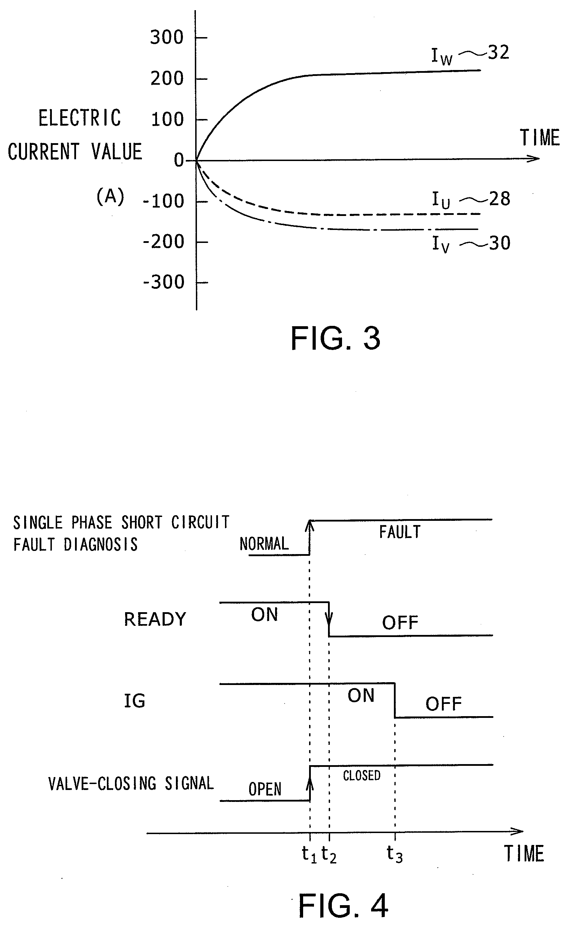

FIG. 3 illustrates an example of actual electric current values at the time of a single phase short circuit fault occurring in the inverter circuit 24. In FIG. 3, the horizontal axis indicates time and the vertical axis indicates an electric current value flowing in the arm of each phase. As illustrated, at the time of a single phase short circuit fault occurring in the inverter circuit 24, a significant amount of electric current IW flows intensively in the W phase compared to the electric current flowing in other phases.

In this manner, when a single phase short circuit fault occurs in the inverter circuit 24, the inverter circuit 24 cannot operate normally and cannot supply a normal drive signal to the rotary electric machine 38. Accordingly, the vehicle control system 100 for the vehicle 10 outputs a signal indicating this malfunction by using an automatic diagnosis function. When this malfunction signal is output, a READY signal indicating that the vehicle 10 is in an operable state, which is ON, is turned OFF. This disenables the operation of the vehicle 10, causing the vehicle 10 to stop.

The above-described state is illustrated in FIG. 4. FIG. 4 is a time chart illustrating a change in the state of various signals. In FIG. 4, the horizontal axis indicates time, and the vertical axis indicates sequentially, in order from the upper level toward the lower level, a single phase short circuit fault diagnosis signal which is output by the automatic diagnosis function, a READY signal, and an ignition (IG) signal of the vehicle 10. The lowermost level of FIG. 4 indicates a valve-closing signal with respect to the on-off valve 58, the content of which will be described below.

As illustrated in FIG. 4, when a single phase short circuit fault occurs in the inverter circuit 24, this fault is detected and, at time t1, the single phase short circuit fault diagnosis signal is changed from a normal state to a fault state by means of the automatic diagnosis function. Then, after the time delay corresponding to the time required for signal processing, at time t2, the READY signal is changed from ON to OFF. Further, the ignition signal of the vehicle is changed from ON to OFF at time t3 after lapse of the time required for confirming the states of other equipment or the like.

As described above, when the READY signal is turned OFF, the vehicle 10 is placed in a state in which self-running is not possible. Accordingly, the user makes contact with an appropriate service center or the like and awaits arrival of the rescue vehicle 8. When the rescue vehicle 8 arrives, the vehicle 10 is towed by the rescue vehicle 8 to the service center or the like. FIG. 1 illustrates such a situation.

As described above, it can be understood that, when the single phase short circuit fault occurs in the inverter circuit 24 during travelling of the vehicle 10, a greater amount of electric current flows intensively in the phase in which the single phase short circuit fault is occurring compared to the amount of current flowing in other phases. Once the READY signal of the vehicle 10 is turned OFF, the operation of the inverter circuit 24 is also inhibited, which prevents this greater amount of electric current from flowing. However, when the driving wheels 12 are rotated during towing as illustrated in FIG. 1, electric current is generated in the coil of each phase by means of a counterelectromotive power of the magnet of the rotary electric machine 38 and flows in the arm of each phase. At this time, as the single phase short circuit fault is occurring, a greater amount of phase current flows in a specific phase in which the single phase short circuit fault is occurring compared to the amount of phase current flowing in other phases.

As such, when a great amount of electric current flows intensively in the coil of a specific phase of the rotary electric machine 38, the coil end of the rotary electric machine 38 is overheated. As the interior of the casing which houses the rotary electric machine 38 contains a circulating cooling fluid, the circulating cooling fluid in which the coil end is immersed is overheated. Because an ATF which is oil is used as the circulating cooling fluid, there is a possibility that the overheated ATF will emit white smoke. In other words, there is a possibility that, while the fault vehicle 10 is being towed, the rotary electric machine unit 40 will emit white smoke, which may make the user to misconstrue that a fire has broken out.

The above-described problem which arises under the towing situation as illustrated in FIG. 1 can be solved by the present invention. The structure and the operation of the vehicle control system 100 will be described.

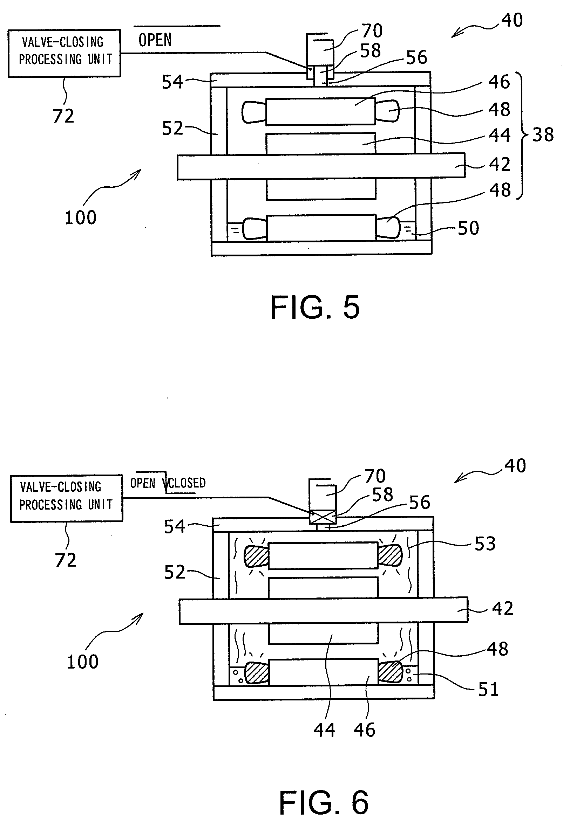

FIG. 5 illustrates a portion in the vehicle control system 100 relevant to a rotary electric machine unit 40. The rotary electric machine unit 40 is formed to comprise a rotary electric machine 38, a casing 52 which houses the rotary electric machine 38 and a lubricating cooling fluid 50, and a breather 70 connected to the casing 52 via an on-off valve 58. A signal line from a valve-closing processing unit 72 of a controller 18 is connected to the on-off valve 58.

The casing 52 is a so-called "motor case" which houses constitutional components of the rotary electric machine 38. In the illustrated example, the casing 52 is in the form of a container with its upper portion being opened, and a cover 54 is provided so as to cover the upper opening in a sealing manner. Of course, a structure in which the cover 54 is integrally formed with the casing 52 in the form of a container may also be used.

The rotary electric machine 38 is formed to comprise a rotary shaft 42 which is rotatably supported by the casing 52, a rotor 44 which is a rotary element that is attached to the rotary shaft 42 and rotates with the rotary shaft 42, and a stator 46 which is a stationary element that is attached to the casing 52. A permanent magnet is provided to the rotor 44, and coils of the respective phases are wound around the stator 46. A coil end 48 is a portion of the coil of each phase wound around the stator 46 which passes outside of the stator 46, and has a shape which extends towards both axial ends of the stator 46.

When a predetermined drive signal is supplied from the inverter circuit 24 to the coil of each phase wound around the stator 46, the rotary electric machine 38 generates a rotating magnetic field, and, through interaction of the rotating magnetic field with the permanent magnet of the rotor 44, generates a rotary driving power on the rotary shaft 42. In this manner, the rotary electric machine 38 is driven by the inverter circuit 24 to thereby output rotary driving power on the rotary shaft 42.

The lubricating cooling fluid 50 contained in the casing 52 is a fluid having a lubrication effect for reducing the rolling friction of the rotary shaft 42 when the rotary electric machine 38 operates and a cooling effect for cooling the heat generated by the coil of each phase. As a specific example, automatic transmission fluid (ATF) can be used as the lubricating cooling fluid 50. Upon actuation of the rotary electric machine 38, the lubricating cooling fluid 50 is pumped up to the upper portion of the casing 52 by a circulation pump or the like which is not illustrated, and percolates down onto the coil end 48 of the stator 46 and the rotor 44.

When charging the casing 52 with the lubricating cooling fluid 50, the lubricating cooing fluid 50 accumulates at the bottom portion of the casing 52 at a level approximately corresponding to the fuel level height, in which the coil end 48 of the stator 46 at the bottom portion is immersed. FIG. 5 illustrates a state in which the rotary electric machine 38 is not operated, in which the interior of the casing 52 is charged with the lubricating cooling fluid 50 to a fuel level height as described above. The oil level can be modified as appropriate in accordance with the specification of the rotary electric machine 38 or the like. For example, by supplying the lubricating cooling fluid 50 to the fuel level height at which a portion of the rotor 44 is immersed with the fluid when the rotary electric machine 38 is not operated, it is possible to stir up the lubricating cooling fluid 50 by rotation of the rotor 44 without using a circulation pump.

The breather 70 is a gas communication unit for making the internal pressure, which is the pressure within a sealed chamber defined by the casing 52 and the cover 54, correspond to the external pressure which is the atmospheric pressure of the external environment. The breather 70 has a structure which prevents the lubricating cooling fluid 50 contained in the internal space sectioned by the casing 52 and the cover 54 from leaking outside. As illustrated in FIG. 5, a labyrinth-like air communication passage can be provided, for example.

The on-off valve 58 is a valve which is provided in a connection portion 56 connecting the casing 52 and the breather 70 and which is opened and closed by an electrical signal. More specifically, an opening portion is provided in the cover 54, and the connection portion 56 in the shape of a pipe is provided for connecting the opening portion and a connection port provided at the lower portion of the breather 70. The on-off valve 58 is provided in the middle of the pipe shape of the connection portion 56.

The valve-closing processing unit 72, which is a portion of the controller 18, has a function of executing valve-closing processing of the on-off valve 58. As described above, because the breather 70 is provided to allow the internal pressure to correspond to the outside atmospheric pressure and thereby prevent insulation breakdown of the rotary electric machine 38 or the like, it is necessary to secure air communication during traveling of the vehicle 10 in which the rotary electric machine 38 is operated. Accordingly, the valve-closing processing unit 72 executes processing such that the on-off valve 58 is placed in a closed state only under a predetermined condition which causes the lubricating cooling fluid 50 to be overheated and is maintained in an open state at other times.

Here, one example predetermined condition which causes the lubricating cooling fluid 50 to be overheated is a case in which single phase short circuit fault occurs in the inverter circuit 24 as described above. In particular, as there is a possibility that the lubricating cooling fluid is to be overheated when, after the occurrence of the single phase short circuit fault, the vehicle 10 is determined as a fault vehicle and is towed by the rescue vehicle 8, the predetermined condition can include the case in which the vehicle 10 is to be towed. More specifically, processing is performed in which the on-off valve 58 is maintained in an open state during normal times and the on-off valve 58 is closed when the READY signal changes from ON to OFF, as described above with reference to FIG. 4.

This status is illustrated by the valve-closing signal in FIG. 4. Specifically, the valve-closing signal is normally in an open state, and at time t2 when, after the single phase short circuit fault diagnosis signal changes from a normal state to a fault state, the READY signal changes from ON to OFF, the valve-closing signal is placed in a closed state. As the valve-closing signal is normally in an open state, the state in which this open state is changed to the closed state can be referred to as a state in which a valve-closing signal has been output. The valve-closing processing unit 72 has a function of supplying this valve-closing signal to the on-off valve 58.

Here, the on-off valve 58, is placed in a closed state upon receipt of the valve-closing signal, and this closed state is maintained even after the power source is turned off. Then, the on-off valve 58 can recover the open state by means of initialization processing at the time of turning the power source ON. A trigger driving method or the like can be used for the on-off valve 58, for example.

FIG. 5 illustrates a state in which the valve-closing processing unit 72 does not provide a valve-closing signal to the on-off valve 58. Consequently, the on-off valve 58 is in an open state, and the interior space sectioned by the casing 52 and the cover 54 is in a gas communicating state with the outside air by the breather 70.

FIG. 6 illustrates a state in which a single phase short circuit fault occurs in the inverter circuit 24. As described above, the valve-closing signal is placed in a closed state at the time point when a single phase short circuit fault occurs to change the READY signal from ON to OFF, and the valve-closing signal in the closed state is output to the on-off valve 58. As a result, the on-off valve 58 is placed in a closed state, and the interior space sectioned by the casing 52 and the cover 54 is changed into a sealed space in which gas communication with the outside air is blocked.

As described above, because the on-off valve 58 is closed at the time point when single phase short circuit fault occurs in the inverter circuit 24 and the READY signal changes from ON to OFF, even if the coil end 48 overheats and causes vaporization of the lubricating cooling fluid 51 and the formation of white smoke 53, the white smoke 53 remains within the interior space sectioned by the casing 52 and the cover 54. Specifically, as described above with reference to FIG. 1, even if the driving wheels 12 are rotated by towing, which causes the coil end 48 to be overheated to vaporize the overheated lubricating cooling fluid 51 to generate white smoke 53, emission of the white smoke 53 to the environment via the breather 70 is prevented.

While in the above example, the valve-closing signal is changed from an open state to a closed state at time t2 when the READY signal changes from ON to OFF, the valve-closing signal may be changed from an open state to a closed state at time t1 when the single phase short circuit fault diagnosis signal changes from a normal state to a fault state. Also, the valve-closing signal may changed from an open state to a closed state at any time point, when, after the time t1 when the single phase short circuit fault diagnosis signal changes from a normal state to a fault state, any other signal which is related to the fault is output.

When the vehicle 10 is towed by the rescue vehicle 8 which is another towing means as illustrated in FIG. 1, the vehicle 10 cannot be towed, if the ignition switch of the vehicle 10 remains OFF and the movement of the steering wheel of the vehicle 10 is prohibited. It is therefore general to turn the ignition switch of the fault vehicle ON to shift the transmission to a neutral state when the fault vehicle is being towed. If the vehicle 10 is equipped with an electric shift lever, a neutral signal is output when the transmission is shifted to a neutral state. It is thereby possible to output a valve-closing signal in synchronization with the neutral signal to thereby place the on-off valve 58 from the open state to the closed state.

Also, if the vehicle 10 has a towing state instruction button which is operated when the vehicle 10 is to be towed by another means, it is also possible to change the valve-closing signal from an open state to a closed state and output the valve-closing signal in the closed state to the on-off valve 58 when the towing state instruction button is pressed.

While in the above description, an example in which single phase short circuit fault occurs in the inverter circuit 24 was described as one example of the predetermined condition which causes the lubricating cooling fluid 50 to be overheated, in addition to this example, a situation in which the vehicle 10 is very heavily loaded to make the temperature of the lubricating cooling fluid 50 too high can also be considered as one predetermined condition. While it is normal in such a situation for the vehicle to perform a controlling operation in which, by outputting an abnormal signal indicating this abnormal state, the load of the vehicle 10 is reduced and the vehicle 10 is stopped, by implementing the present invention it is further possible to perform the valve-closing processing in combination with the vehicle stopping processing.

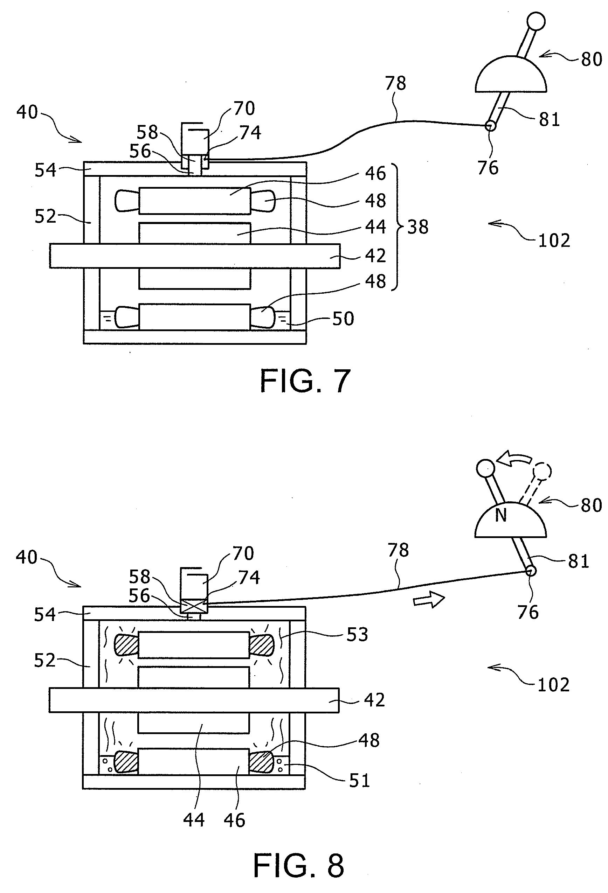

While in the above examples, the on-off valve 58 has been described as a valve which is opened or closed by an electrical signal, the on-off valve 58 may be a mechanical on-off valve which is operated mechanically. FIG. 7 is a view for explaining the structure of a vehicle control system 102 wherein a mechanical on-off valve 58 is used. As described above, when a fault vehicle is being towed, it is general to turn the ignition switch of the fault vehicle ON and shift the transmission to a neutral state. Accordingly, in this example, this general operation is used to place the on-off valve 58 from an open state to a closed state in a mechanical manner in conjunction with the shift of the transmission to a neutral state.

In FIG. 7, an operation cable 78 is formed of a material which has an appropriate strength and does not extend when it is pulled. As such, the operation cable 78 is a cable member whose one side is moved, when whose other side is pulled, by an amount corresponding to the pulling amount. Near end 74 of the operation cable 78 is connected to an opening and closing means which mechanically operates the on-off valve 58, and far end 76 of the operation cable 78 is connected to an operation cable connection mechanism 81 provided in a shift state setting mechanism 80 of the vehicle 10.

Here, if the shift state setting mechanism 80 is operated electrically, a method in which a neutral signal is used to output a valve-closing signal as described above can be used. Accordingly, in this example, the shift state setting mechanism 80 will be described as a mechanism which sets the shift state by a mechanical operation of the shift lever. The operation cable connection mechanism 81 is a mechanism in the shift state setting mechanism 80, which, when the shift state changes from a normal traveling state to a neutral state, moves far end 76 of the operation cable 78 to thereby move the near end 74 of the operation cable 78.

In FIG. 7, far end 76 of the operation cable 78 is connected to an end portion of the operation cable connection mechanism 81 which is on the opposite side of the operation portion of the shift lever with a pivot point being disposed therebetween in such a manner that the shift lever can pivot about a pivot point. Any other mechanism may be adopted as long as far end 76 of the operation cable 78 is moved in accordance with a shift to the neutral state by the shift state setting mechanism 80.

FIG. 8 illustrates a state in which, when the shift state is changed from the normal traveling state to the neutral state in the shift state setting mechanism 80, the operation cable 78 moves to the direction indicated by an arrow to place the on-off valve 58 into a closed state. As described above, with the use of the mechanical on-off valve 58 and the operation cable 78, the need for providing an electrical circuit is eliminated, restrictions by the trigger operation driving in the electrical on-off valve are not required, and initialization of the electrical circuit is also unnecessary, so that switching between the open state and the closed state of the on-off valve 58 can be performed with a simple mechanism.

Alternatively, rather than using the shift state setting mechanism 80, far end of the operation cable may be connected to an engage portion for towing, such as a hook, provided on the vehicle 10, which is used when the vehicle 10 is towed by other towing means such as the rescue vehicle 8. In this case, as a pulling force is exerted on the hook or other engage portion for towing on the vehicle 10 at the time of towing, this pulling force is used to move far end of the operation cable, so that the opening/closing means of the on-off valve 58 connected to the one side of the operation cable can be changed from the open state to the closed state.

### INDUSTRIAL APPLICABILITY

The vehicle control system according to the present invention can be used for control of a vehicle in which a rotary electric machine is mounted.

### REFERENCE NUMBERS

6 road surface, 8 rescue vehicle, 10 vehicle, 12 driving wheel, 14 PCU, 16 power storage device, 18 controller, 20 inverter section, 22 voltage converter, 24 inverter circuit, 28 30, 32 electric current, 28 rotary electric machine, 40 rotary electric machine unit, 42 rotation shaft, 44 rotor, 46 stator, 48 end coil, 50, 51 lubricating cooling fluid, 52 casing, 53 white smoke, 54 cover, 56 connection portion, 58 on-off valve, 70 breather, 72 valve-closing processing section, 74 near end, 76 far end, 78 operation cable, 80 shift state setting mechanism, 81 operation cable connection mechanism, 100, 102 vehicle control system.

## Claims

1. A vehicle control system **(100),** comprising:
a rotary electric machine **(38)** which is mounted in a vehicle **(10)** and contains a lubricating cooling fluid **(50)** therein;
a breather **(70)** which is provided on a casing **(52)** for the rotary electric machine **(38),** the breather **(70)** preventing leakage of the lubricating cooling fluid **(50)** and allowing gas communication with the outside; and
an on-off valve **(58)** which is provided in a connection portion connecting the casing for the rotary electric machine **(38)** with the breather **(70)**,
the on-off valve **(58)** normally being in an open state; and
the vehicle control system **(100)** further comprising a valve-closing unit **(72)** which places the on-off valve **(58)** into a closed state mechanically or based on an electrical signal satisfying a predetermined condition associated with generation of white smoke **(53)** due to overheating of the lubricating cooling fluid **(50),** for suppressing emission of the generated white smoke **(53).**

2. The vehicle control system **(100)** according to Claim 1, wherein
the valve-closing unit **(72)** is a unit which, when it is determined, based on a predetermined condition that a fault signal is output by means of an automatic diagnosis function, that a single phase short circuit fault has occurred in an inverter circuit **(24)** which drives the rotary electric machine **(38),** outputs a valve-closing signal for closing an electrical on-off valve **(58)** in synchronization with the fault signal.

3. The vehicle control system **(100)** according to Claim 1, wherein
the on-off valve **(58)** is an electrical on-off valve which operates electrically, and
the valve-closing unit **(72)** is a unit which, based on a predetermined condition that a READY signal which enables the vehicle **(10)** to run is turned off, outputs a valve-closing signal for closing the electrical on-off valve **(58)** in synchronization with the turning off of the READY signal.

4. The vehicle control system according to Claim 1, wherein
the on-off valve **(58)** is an electrical on-off valve which operates electrically, and
the valve-closing unit **(72)** is a unit which outputs a valve-closing signal for closing the electrical on-off valve **(58)** in synchronization with a neutral signal which is output by turning an ignition switch on and setting a neutral state by a shift state setting mechanism **(80),** when the vehicle **(10)** is towed by a towing unit.

5. The vehicle control system **(100)** according to Claim 1, wherein
the on-off valve **(58)** is a mechanical on-off valve which operates mechanically, and
the vehicle control system **(100)** comprises;
an operation cable **(78)** having near end **(74)** connected to an opening and closing unit for the on-off valve **(58),** the operation cable setting the on-off valve **(58)** in a closed direction when far end **(76)** thereof is mechanically moved; and
an operation cable connection mechanism **(81)** which is provided in a shift state setting mechanism **(80)** of the vehicle, the operation cable connection mechanism **(81)** moving far end **(76)** of the operation cable when a neutral state is set by the shift state setting mechanism **(80).**

6. The vehicle control system **(100)** according to Claim 1, wherein
the on-off valve **(58)** is a mechanical on-off valve which operates mechanically, and
the vehicle control system **(100)** comprises;
an operation cable **(78)** having near end **(74)** connected to an opening and closing unit for the on-off valve **(58),** the operation cable setting the on-off valve **(58)** into a closed direction when far end **(76)** thereof is mechanically moved; and
an operation cable connection mechanism **(81)** which is provided in an engage portion for towing that is used when towing the vehicle **(10)** by a towing unit, the operation cable connection mechanism **(81)** moving far end **(76)** of the operation cable **(78)** by a pulling force that is exerted on the engage portion for towing.

## Patentansprüche

1. Fahrzeugsteuerungssystem **(100),** mit:
einer rotierenden Elektromaschine **(38),** die in einem Fahrzeug **(10)** montiert ist und darin ein schmierendes Kühlfluid enthält;
einer Entlüftung **(17),** die an einem Gehäuse **(52)** für die rotierende Elektromaschine **(38)** bereitgestellt ist, wobei die Entlüftung **(70)** eine Leckage des schmierenden Kühlfluids **(50)** verhindert und eine Gaskommunikation nach außen ermöglicht; und
einem Ein-Aus-Ventil **(58),** das in einem Verbindungsabschnitt bereitgestellt ist, der das Gehäuse für die rotierende Elektromaschine **(38)** mit der Entlüftung **(70)** verbindet,
wobei sich das Ein-Aus-Ventil **(58)** normal in einem offenen Zustand befindet; und
das Fahrzeugsteuerungssystem **(100)** weiterhin eine Ventilschließeinheit **(72)** aufweist, die das Ein-Aus-Ventil **(58)** mechanisch oder basierend auf einem elektrischen Signal, das eine vorbestimmte Bedingung verknüpft mit einer Erzeugung weißen Rauches **(53)** aufgrund eines Überhitzens des schmierenden Kühlfluids **(50)** erfüllt, in einen geschlossenen Zustand setzt, zum Unterbinden einer Emission des erzeugten weißen Rauchs **(53).**

2. Fahrzeugsteuerungssystem **(100)** gemäß Anspruch 1, wobei
die Ventilschließeinheit **(72)** eine Einheit ist, die, wenn basierend auf einer vorbestimmten Bedingung, dass ein Fehlfunktionssignal mittels einer automatischen Diagnosefunktion ausgegeben wird, bestimmt wird, dass eine Einzelphasenkurzschluss-Fehlfunktion in einer Inverterschaltung **(24)** aufgetreten ist, die die rotierende Elektromaschine **(38)** antreibt, ein Ventilschließsignal zum Schließen eines elektrischen Ein-Aus-Ventils **(58)** synchron mit dem Fehlfunktionssignal ausgibt.

3. Fahrzeugsteuerungssystem **(100)** gemäß Anspruch 1, wobei
das Ein-Aus-Ventil **(58)** ein elektrisches Ein-Aus-Ventil ist, das elektrisch betrieben wird, und
die Ventilschließeinheit **(72)** eine Einheit ist, die, basierend auf einer vorbestimmten Bedingung, dass ein BEREIT-Signal, welches ein Fahren des Fahrzeugs **(10)** ermöglicht, ausgeschaltet ist, ein Ventilschließsignal zum Schließen des elektrischen Ein-Aus-Ventils **(58)** synchron mit dem Ausschalten des BEREIT-Signals ausgibt.

4. Fahrzeugsteuerungssystem gemäß Anspruch 1, wobei
das Ein-Aus-Ventil **(58)** ein elektrisches Ein-Aus-Ventil ist, das elektrisch betrieben wird, und
die Ventilschließeinheit **(72)** eine Einheit ist, die ein Ventilschließsignal zum Schließen des elektrischen Ein-Aus-Ventils **(58)** synchron mit einem Neutralsignal, das durch Einschalten eines Zündschalters ausgegeben wird und einen Neutralzustand durch einen Schaltzustandseinstellmechanismus **(80)** einstellt, ausgibt, wenn das Fahrzeug **(10)** durch eine Abschleppeinheit abgeschleppt wird.

5. Fahrzeugsteuerungssystem **(100)** gemäß Anspruch 1, wobei
das Ein-Aus-Ventil **(58)** ein elektrisches Ein-Aus-Ventil ist, das elektrisch betrieben wird, und
das Fahrzeugsteuerungssystem **(100)** aufweist:
ein Betriebskabel **(78)** mit einem nahen Ende **(74),** das mit einer Öffnungs- und Schließeinheit für das Ein-Aus-Ventil **(58)** verbunden ist, wobei das Betriebskabel das Ein-Aus-Ventil **(58)** in einen geschlossenen Zustand einstellt, wenn ein entferntes Ende **(76)** davon mechanisch bewegt wird; und
einen Betriebskabelverbindungsmechanismus **(81),** der in einem Schaltzustandseinstellmechanismus **(80)** des Fahrzeugs bereitgestellt ist, wobei der Betriebskabelverbindungsmechanismus **(81)** das entfernte Ende **(76)** des Betriebskabels bewegt, wenn ein Neutralzustand durch den Schaltzustandseinstellmechanismus **(80)** eingestellt wird.

6. Fahrzeugsteuerungssystem **(100)** gemäß Anspruch 1, wobei
das Ein-Aus-Ventil **(58)** ein elektrisches Ein-Aus-Ventil ist, das elektrisch betrieben wird, und
das Fahrzeugsteuerungssystem **(100)** aufweist:
ein Betriebskabel **(78)** mit einem nahen Ende **(74),** das mit einer Öffnungs- und Schließeinheit für das Ein-Aus-Ventil **(58)** verbunden ist, wobei das Betriebskabel das Ein-Aus-Ventil **(58)** in einen geschlossenen Zustand einstellt, wenn ein entferntes Ende **(76)** davon mechanisch bewegt wird; und
einen Betriebskabelverbindungsmechanismus **(81),** der in einem Eingriffsabschnitt zum Abschleppen bereitgestellt ist, der bei Abschleppen des Fahrzeugs **(10)** durch eine Abschleppeinheit verwendet wird, wobei der Betriebskabelverbindungsmechanismus **(81)** das entfernte Ende **(76)** des Betriebskabels durch eine Zugkraft, die zum Abschleppen auf den Eingriffsabschnitt ausgeübt wird, bewegt.

## Revendications

1. Système de commande de véhicule (100), comprenant :
une machine électrique tournante (38) qui est montée dans un véhicule (10) et contient un fluide de refroidissement lubrifiant (50) à l'intérieur ;
un respirateur (70) qui est placé sur un carter (52) pour la machine électrique tournante (38), le respirateur (70) empêchant la fuite du fluide de refroidissement lubrifiant (50) et permettant une communication de gaz avec l'extérieur ; et
une vanne on-off (58) qui est placée dans une partie de liaison reliant le carter pour la machine électrique tournante (38) avec le respirateur (70),
la vanne on-off (58) étant normalement dans un état ouvert ; et
le système de commande de véhicule (100) comprenant en outre une unité de fermeture de vanne (72) qui place la vanne on-off (58) dans un état mécaniquement fermé ou en fonction d'un signal électrique satisfaisant une condition prédéterminée associée à la génération de fumée blanche (53) du fait de la surchauffe du fluide de refroidissement lubrifiant (50), pour supprimer l'émission de la fumée blanche (53) générée.

2. Système de commande de véhicule (100) selon la revendication 1, dans lequel
l'unité de fermeture de vanne (72) est une unité qui, quand il est déterminé, en fonction d'une condition prédéterminée qu'un signal de panne est sorti au moyen d'une fonction de diagnostic automatique, qu'une panne de court-circuit sur une phase a eu lieu dans un circuit inverseur (24) qui pilote la machine électrique tournante (38), sort un signal de fermeture de vanne pour fermer une vanne on-off (58) en synchronisation avec le signal de panne.

3. Système de commande de véhicule (100) selon la revendication 1, dans lequel
la vanne on-off (58) est une électrovanne on-off qui fonctionne électriquement, et
l'unité de fermeture de vanne (72) est une unité qui, en fonction d'une condition prédéterminée qu'un signal PRÊT qui permet au véhicule (10) d'avancer est éteint, sort un signal de fermeture de vanne pour fermer l'électrovanne on-off (58) en synchronisation avec l'extinction du signal PRÊT.

4. Système de commande de véhicule selon la revendication 1, dans lequel
la vanne on-off (58) est une électrovanne on-off qui fonctionne électriquement, et
l'unité de fermeture de vanne (72) est une unité qui sort un signal de fermeture de vanne pour fermer l'électrovanne on-off (58) en synchronisation avec un signal neutre qui est sorti en allumant un commutateur d'allumage et réglant un état neutre par un mécanisme de passage de vitesse (80), quand le véhicule (10) est remorqué par une unité de remorquage.

5. Système de commande de véhicule (100) selon la revendication 1, dans lequel
la vanne on-off (58) est une vanne on-off mécanique qui fonctionne mécaniquement, et
le système de commande de véhicule (100) comprend ;
un câble d'actionnement (78) comportant une extrémité proximale (74) reliée à une unité d'ouverture et de fermeture pour la vanne on-off (58), le câble d'actionnement réglant la vanne on-off (58) dans une direction fermée quand une extrémité distale (76) de celui-ci est déplacée mécaniquement ; et
un mécanisme de liaison de câble d'actionnement (81) qui est placé dans un mécanisme de passage de vitesse (80) du véhicule, le mécanisme de liaison de câble d'actionnement (81) déplaçant une extrémité distale (76) du câble d'actionnement quand un état neutre est réglé par le mécanisme de passage de vitesse (80).

6. Système de commande de véhicule (100) selon la revendication 1, dans lequel
la vanne on-off (58) est une vanne on-off mécanique qui fonctionne mécaniquement, et
le système de commande de véhicule (100) comprend ;
un câble d'actionnement (78) comportant une extrémité proximale (74) reliée à une unité d'ouverture et de fermeture pour la vanne on-off (58), le câble d'actionnement réglant la vanne on-off (58) dans une direction fermée quand une extrémité distale (76) de celui-ci est déplacée mécaniquement ; et
un mécanisme de liaison de câble d'actionnement (81) qui est placé dans une partie d'accrochage pour remorquage qui est utilisée lors du remorquage du véhicule (10), le mécanisme de liaison de câble d'actionnement (81) déplaçant une extrémité distale (76) du câble d'actionnement (78) par une force de traction qui est exercée sur la partie d'accrochage de remorquage.
